# EUROPEAN PATENT APPLICATION

(11) **EP 3 992 100 A1**
(43) Date of publication of application: **04.05.2022**
(21) Application number: 20204873.2
(22) Date of filing: 30.10.2020
(51) Int. Cl.: B65D 19/00, B60P 3/10, B63C 15/00

(54) **TRANSPORT BASE**

(71) Applicant: Foam Fellows OY, 24130 Salo (FI)
(72) Inventor: Lindqvist, Vesa, 24130 SALO (FI); Hoikkala, Henri, 20740 TURKU (FI)
(74) Representative: Berggren Oy

(57) **Abstract**

Transport base (1), which has a solid structure and having an upper surface (2), a lower surface (3) and side surfaces (4a, 4ab), the upper surface of the transport base is shaped to be support an item to be transported and the transport base is manufactured from extruded polystyrene.

## Description

### Field of the invention

The present invention relates to a transport base according to the preamble of the independent claim presented below. The invention relates also to use of extruded polystyrene as a material of transport bases.

### Background of the invention

Transport bases or pallets are typically manufactured from wood. When transporting an item which can be easily damaged during transport, there is a need to protect said item to be transported for damaging. For example, transport of watercraft, such as boat, yacht or jet ski requires separate transport bases below the watercraft to be transported. Boat trestles made of wood are commonly used for supporting watercraft during transport. Boat trestles require separate padding between the watercraft and the trestles or the boat trestles itself are padded to protect the watercraft from possible damages, such as scratching the bottom of the watercraft during transport. This requires additional work and positioning of the separate padding is laborious. And often despite of the paddings the watercraft or other item to be transported may still be damaged during the transport.

In addition, the trestles or other transport bases made of wood are quite big and heavy, which make their handling troublesome. Boat trestles or other transport bases made of wood are also problematic, if the items are shipped to the countries which have strict legislation relating to natural based products. In these cases, the wood material needs to be heat treated or treated with pesticides for killing parasites, fungus and other pests which can live inside the timber. Boat trestles or other transport bases made of metal can be used instead of wood, but they are more expensive and complicated to produce compared to the wooden trestles. A surface of metal trestles or other transport bases is hard and having low friction, and hence the boat trestles or other support bases made of metal also require separate padding between the watercraft and the trestles or the metal boat trestles itself are padded to protect the watercraft or other item to be transported from possible damages.

In addition, the recycling or disposal of wooden or metal trestles or other transport bases are also troublesome.

### Summary of the Invention

It is an object of the present invention to reduce or even eliminate the above-mentioned problems appearing in prior art.

It is an object of the present invention to provide a transport base which enables transportation of an item without additional padding between the item to be transported and the transport base. Hence, the object of the invention is to provide a simple and cost-effective way to produce a transport base.

Further, an object of the present invention is to provide a transport base especially for transport of watercraft.

Further, an object of the present invention is to provide a novel material for use in the manufacture of the transport bases, which material reduce or even eliminate the above-mentioned problems appearing in transport of the items.

In order to achieve among others the objects presented above, the invention is characterized by what is presented in the characterizing parts of the enclosed independent claims.

The embodiments and advantages mentioned in this text relate, where applicable, both to the transport base, the method for manufacturing the transport base as well as to the uses according to the invention, even though it is not always specifically mentioned.

A typical transport base according to the invention has a solid structure and having an upper surface, a lower surface and side surfaces, the upper surface of the transport base is shaped to be support an item to be transported, and the transport base is manufactured from extruded polystyrene.

According to the present invention extruded polystyrene (XPS) material is used as a material of transport base. In a preferred embodiment according to the present invention, XPS is used as a material of transport base, wherein the surface of the material is free of any coating(s).

Surprisingly, it has now been found that a transport base can be manufactured from extruded polystyrene (XPS). Extruded polystyrene is a rigid foamed plastic material, which has an adequate strength for withstanding weight of the item(s) to be transported. At same time XPS is also adequately soft material, wherein it does not damage the item(s) to be transported. Hence, a transport base according to the present invention does not require a separate padding between the item(s) to be transported and the transport base made of XPS, but the transport base of the present invention itself protects the items to be transported from damages during transport. Further, a transport base according to the present invention allows the manufacturing of the transport base from extruded polystyrene without any separate coating(s) on the surface of the transport base. Extruded polystyrene is suitable material as such for use in manufacture of transport base. A surface of transport base according to the present invention made of extruded polystyrene provides friction which in combination with the softness of the material supports and protects the item(s) during transport.

Further, an upper surface of the transport base according to the present invention made of extruded polystyrene can be easily shaped to correspond with an item to be transported or shaped to a shape that provides adequately support for the item(s) during transport. A transport base according to the present invention made of extruded polystyrene provides easy method to design transport bases in different kind of the items. Extruded polystyrene is material which can be easily shaped to different forms without the damaging the properties of the material.

In a preferred embodiment according to the present invention, watercraft transport base has a solid structure and having an upper surface and a lower surface, the upper surface of the transport base is shaped to be support watercraft to be transported, and the transport base is manufactured from extruded polystyrene. Watercraft to be transported may be e.g. boat, yacht or jet ski or any other watercraft. The transport base according to the present invention is also suitable for other items. In exemplary embodiments, the item may also be any parts of vehicles, blade of wind power plant, or different kind of pipes or the like. Especially, the transport support according to the present invention is suitable for items having finished surface which cannot be damaged during transport. A transport base according to the present invention can stand heavy loads and therefore it does not set limitations to an item to be transported. A transport base according to a typical embodiment of the present invention carries a load of 10 000 kg/m².

A transport base according to the present invention made of extruded polystyrene is more lightweight as wooden or metal transport bases. Further, a transport base according to the present invention made of extruded polystyrene does not crumble easily. Hence, it is also easier to handle. Extruded polystyrene provides as the material also many other advantages compared to wood or metal, a transport base according to the present invention made of extruded polystyrene does not decompose or rust, and it does not require any treatment for killing parasites, fungus and other pests. Extruded polystyrene material has completely closed cell structure, which also ensures that it is also impermeable to water. In addition, the extruded polystyrene is a fully recyclable material.

### Description of the drawings

The invention will be described in more detail with reference to appended drawings, in which
- Figs. 1a-1d: show a transport base according to an embodiment of the invention with a V-shaped upper surface,
- Fig. 2: shows a transport base according to another embodiment of the invention with a V-shaped upper surface,
- Fig. 3: shows a transport base according to an embodiment of the invention with U-shaped grooves in the upper surface of the transport base, and
- Fig. 4: shows a transport base according to yet another embodiment of the present invention.

### Detailed description of the invention

A transport base according to the present invention is manufactured from extruded polystyrene (XPS). Extruded polystyrene material is rigid foamed plastic material. It has been observed that it can be used a material of transport bases, especially it is advantageous in applications requiring high loadings and in applications where it is also a need to protect an item to be transported for damaging. Extruded polystyrene allows the manufacturing of the transport base without any separate coating(s) on the surface of the transport base. Hence, extruded polystyrene provides easy and cost-effective material for transport bases.

A transport base according to the present invention made of XPS has a solid structure and having an upper surface, a lower surface and side surfaces. A solid structure means that a transport base is an object made of XPS with uniform structure, which has an upper surface, a lower surface and side surfaces. According to an embodiment of the present invention, the transport base is composed of one uniform piece, which is shaped to the desired shape of the transport base. According to another embodiment of the present invention, a transport base is composed of two or more parts which are attached to each other for forming uniform structure. In an exemplary embodiment, a transport base is formed of two, three or more XPS plates which are stacked in height direction of the transport base and attached to each other in their large surfaces. In an embodiment according to the present invention, the uppermost plate can be shaped to the desired shape.

An upper surface of the transport base according to the present invention is shaped to correspond with an item to be transported or shaped to a shape that provides adequately support for the item(s) during transport. XPS is a material which provides easy manufacturing of transport bases in different shapes. The processing of the extruded polystyrene material is easy e.g. by hot wire foam cutter.

According to one preferred embodiment of the present invention, a transport base is a watercraft transport base, which has a solid structure and having an upper surface and a lower surface, the upper surface of the transport base is shaped to be support watercraft to be transported.

In an embodiment according to the present invention, an upper surface of the transport base is a V-shaped. According to an embodiment of the present invention, a transport base comprises a V-shaped upper surface, wherein an angle between the side surfaces of the V-shaped upper surface is in the range of about 120 - 160° and preferably about 120 - 152°. A watercraft transport base according to an embodiment of the present invention comprises V-shaped upper surface. According to an embodiment of the present invention, a watercraft transport base comprises a V-shaped upper surface, wherein an angle between the side surfaces of the V-shaped upper surface is in the range of about 120 - 160° and preferably about 120 - 150° or 120 - 152°. This makes possible to transport watercraft easily and a watercraft transport base according to the present invention supports watercraft during transport.

According to an embodiment of the present invention, a transport base also comprises a groove between the side surfaces of the V-shaped upper surface. In an embodiment according to the present invention a groove elongates through the transport base in the longitudinal direction of the transport base. In case of a watercraft transport base, said groove supports watercraft during transport and provides an easy using of the transport base.

In an embodiment according to the present invention, an upper surface of the transport base comprises at least one U-shaped groove. The aim of the groove is to support an item to be transported. An upper surface of the transport base may comprise one, two or more grooves or other shapes formed to the upper surface of the transport base. In an embodiment according to the present invention a groove formed to the upper surface of the transport base elongates through the transport base in the length or a width direction of the transport base.

A lower surface of the transport base according to the present invention can be uniform flat surface. In an embodiment according to the present invention, a lower surface of the transport base comprises at least two gaps formed of the lower surface, which gaps elongate through the transport base in the width and/or length direction of the transport base. These gaps are open in toward the lower surface and they are also open-ended in the side surfaces of the transport base. These gaps make possible to handle transport base by forklift or any other means from the longitudinal and/or width direction side of the transport base. In an embodiment according to the present invention, a transport base comprises at least two gaps formed of the lower surface, which gaps elongate through the transport base in the width or length direction of the transport base. In case of watercraft transport base, gaps in the longitudinal side of the transport base provides an easy handling of watercraft from side by forklift.

The present invention makes possible to form any kind of transport base from XPS. An upper surface of the transport base can be shaped depending on the application. In an embodiment according to the present invention, a transport base has a form of a pallet. According to an embodiment of the present invention, a transport base is a pallet made of XPS. A pallet according to the present invention has a solid structure, which comprises an upper surface, a lower surface and side surfaces. An upper surface of the pallet can be flat, or it can be shaped to be support an item to be transported. A lower surface of the transport base in the form of pallet comprises gaps, which elongate through the transport base in the width and/or length direction of the transport base.

According to an embodiment of the present invention, a transport base has a length direction, a width direction and a height direction. A length, width, and height of a transport base according to the present invention can vary depending on the purpose of use. In an embodiment of the present invention, a transport base has a length of 600 - 2500 mm, a width of 600 - 1200 mm and a height of 300 - 600 mm (the highest point of the transport base measured from the lower surface to the upper surface). In one preferred embodiment according to the present invention, a watercraft transport base has a length of 600 - 2500 mm, a width of 300 - 1200 mm and a height of 300 - 600 mm (the highest point of the transport base measured from the lower surface to the upper surface).

For transporting a watercraft, watercraft may be supported by one, two, three or more transport bases according to the present invention depending on the length and weight of the watercraft. A transport base according to a typical embodiment of the present invention carries a load of 10 000 kg/m². A transport base of the present invention can be dimensioned so that it carries a desired weight of the watercraft or other item to be transported. A transport base according to an embodiment of the present invention, when it is designed to the transportation of the watercraft, such as boat, yacht or jet ski, has a length direction, which is a substantially same as the length of the watercraft to be transported. A length direction of the watercraft transport base according to an embodiment of the present invention corresponds with the length direction of the watercraft, i.e. the watercraft transport base with a V-shaped upper surface is arranged in lengthwise under the watercraft. A transport base according to an embodiment of the present invention provides a single piece transport base for watercraft, such as boat or yacht having a length of 4 - 8 m, which can be arranged in lengthwise under the watercraft.

A watercraft transport base according to the present invention does not damage the surface of the watercraft bottom. A watercraft transport base can be also used as dockage support, wherein the end user also benefits the transport base, and a transport support can be re-used repeatedly.

### Detailed description of the drawings

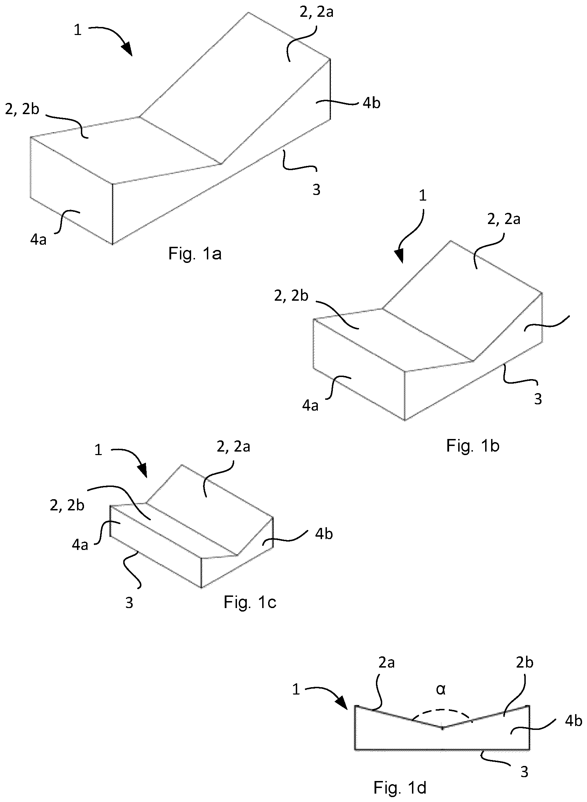

Some embodiments according to the present invention have been shown in Figures 1 - 4. Transport bases 1 presented in Figures 1 - 4 can be manufactured of as one uniform piece or they can be composed of two or more parts which are attached to each other. Transport bases according to the present invention presented in Figures 1 - 4 can also be manufactured in different sizes. A length, a width, and a height of the transport base 1 can be varied depending on application.

Figures 1a - 1d show a transport base 1 according to an embodiment of the invention having a solid structure and made of extruded polystyrene. A transport base 1 comprises an upper surface 2, a lower surface 3 and side surfaces 4a, 4b. An upper surface of the transport base is V-shaped having side surfaces 2a, 2b. A lower surface is flat in the embodiments presented in the Figures 1a - 1d. Figure 1d shows a transport base seen from the end of the transport base and illustrates an angle α between the side surfaces 2a, 2b of the V-shaped upper surface. According to an embodiment of the present invention an angle α between the side surfaces 2a, 2b of the V-shaped upper surface is in the range of about 120 - 160° and preferably about 120 - 152°. As shown in Figures 1a - 1c, a transport base according to the present invention can be manufactured in different sizes. Transport bases 1 presented in Figures 1a - 1d are typically used as a watercraft transport base.

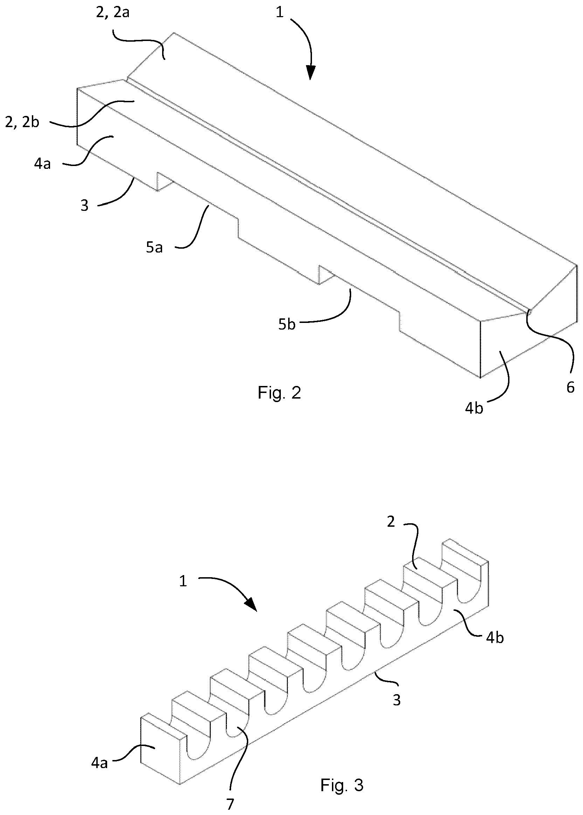

Figure 2 shows a transport base 1 according to another embodiment of the invention with a V-shaped upper surface having a solid structure and made of extruded polystyrene. A transport base 1 comprises an upper surface 2, a lower surface 3 and side surfaces 4a, 4b. An upper surface of the transport base is V-shaped having side surfaces 2a, 2b. According to an embodiment of the present invention an angle between the side surfaces 2a, 2b of the V-shaped upper surface is in the range of about 120 - 160° and preferably about 120 - 152° (an angle is determined as shown in Fig. 1d (angle α). According to an embodiment of the present invention, a transport base 1 also comprises a groove 6 between the side surfaces 2a, 2b of the V-shaped upper surface 2, which groove elongates through the transport base in the longitudinal direction. A lower surface 3 of the transport base 1 presented in Figure 2 comprises two gaps 5a, 5b in the longitudinal side of the transport base which elongate through the transport base 1 in the width direction of the transport base. These gaps 5a, 5b formed on the lower surface of the transport base 1 provides an easy handling of watercraft from side by forklift. Transport base 1 presented in Figure 2 is typically used as a watercraft transport base.

Figure 3 shows a transport base 1 according to an embodiment of the invention having a solid structure and made of extruded polystyrene. A transport base 1 comprises an upper surface 2, a lower surface 3 and side surfaces 4a, 4b. An upper surface 2 of the transport base comprises U-shaped grooves 7. A number and size of the grooves 7 can vary. In the embodiment presented in Figure 3, the grooves 7 elongate through the transport base. A lower surface is flat in the embodiment presented in the Figure 3.

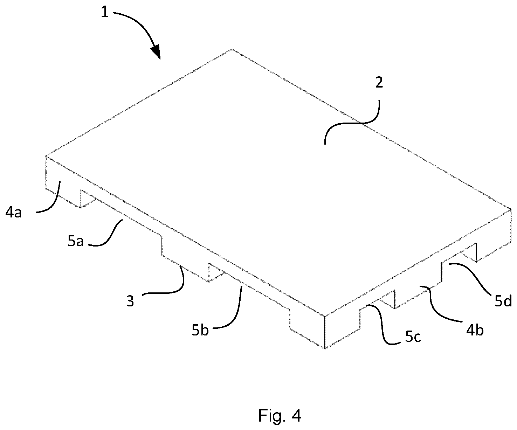

Figure 4 shows a transport base 1 according to yet another embodiment of the present invention a solid structure and made of extruded polystyrene. A transport base 1 presented in Figure 4 has a form of a pallet. A transport base 1 comprises an upper surface 2, a lower surface 3 and side surfaces 4a, 4b. An upper surface can be flat as presented in Figure 4 or it can be shaped to be support an item to be transported. A lower surface 3 of the transport base 1 presented in Figure 4 comprises gaps 5a, 5b, which elongate through the transport base 1 in the width direction of the transport base, and gaps 5c, 5d which elongate through the transport base 1 in the length direction of the transport base.

## Claims

1. Transport base (1), which has a solid structure and having an upper surface (2), a lower surface (3) and side surfaces (4a, 4b), the upper surface (2) of the transport base is shaped to be support an item to be transported, **characterized in that** the transport base (1) is manufactured from extruded polystyrene.

2. The transport base according to claim 1, **characterized in that** the transport base (1) is composed of one uniform piece.

3. The transport base according to claim 1, **characterized in that** the transport base (1) is composed of two or more parts which are attached to each other.

4. The transport base according to any of the preceding claims, **characterized in that** the transport base (1) is a watercraft transport base.

5. The transport base according to any of the preceding claims, **characterized in that** the upper surface of the transport base is a V-shaped.

6. The transport base according to claim 5, **characterized in that** an angle (α) between the side surfaces (2a, 2b) of the V-shaped upper surface is 120 - 160° and preferably 120 - 150° or 120 - 152°.

7. The transport base according to any of the preceding claims 1- 6, **characterized in that** the upper surface (2) of the transport base comprises at least one U-shaped groove (7).

8. The transport base according to any of the preceding claims, **characterized in that** the lower surface (3) of the transport base comprises at least two gaps (5a, 5b, 5c, 5d) which elongate through the transport base (1) in the width and/or length direction of the transport base.

9. The transport base according to any of the preceding claims, **characterized in that** the surface of the extruded polystyrene material is free of any coatings.

10. Use of extruded polystyrene (XPS) material as a material of transport base (1).

11. Use according to claim 10, **characterized in that** the surface of the extruded polystyrene material is free of any coating(s).
